# EUROPÄISCHE PATENTSCHRIFT

(11) **EP 1 209 800 B1**
(45) Veröffentlichungstag und Bekanntmachung des Hinweises auf die Patenterteilung: **29.06.2011**
(21) Anmeldenummer: 01125933.0
(22) Anmeldetag: 31.10.2001
(51) Int. Cl.: H02K 3/14

(54) **Statorwicklungsstab für eine elektrische Maschine**
Bar for a stator winding for electric machines
Barre d'enroulement de stator pour machines électriques

(30) Priorität: 27.11.2000 DE 10058856
(43) Veröffentlichungstag der Anmeldung: 29.05.2002
(73) Patentinhaber: Alstom Technology Ltd, 5400 Baden (CH)
(72) Erfinder: Haldemann, Johann, 5242 Birr (CH)

(56) Entgegenhaltungen:
- FR-A- 1 366 234
- US-A- 3 118 015
- US-A- 3 825 783

## Beschreibung

### TECHNISCHES GEBIET

Die vorliegende Erfindung bezieht sich auf das Gebiet der elektrischen Maschinen. Sie betrifft einen Statorwicklungsstab gemäss dem Oberbegriff des Anspruchs 1.

### STAND DER TECHNIK

Bei Wechselstrommaschinen werden für die Ankerwicklung Roebelstäbe verwendet. Roebelstäbe bestehen aus isolierten, über- und nebeneinander angeordneten, verdrillten Teilleitern. Die von L. Roebel im Jahre 1912 patentierte Verdrillung sieht einen vollen Schraubengang im Aktivteil vor (360°-Verdrillung). In den Endzonen (Wickelkopf) wird der Stab nicht verdrillt. Diese Verdrillungsart kompensiert das Feld längs des Aktivteiles. Sie kompensiert aber nicht die Feldanteile des Wickelkopfes.

Seither sind viele weitere Möglichkeiten der Verdrillung im Aktivteil und in den Endzonen beschrieben und angewendet worden. Eine ganze Palette von Verdrillungen ist in dem Patent von Willyoung (US-A-3,118,015) beschrieben. Stufenlos kann damit der Verdrillungswinkel im Aktivteil zwischen 360° und 720° variiert werden unter Beibehaltung der vollständigen Kompensation des Nutenfeldes. Die Aktivteilverdrillung ist folgendermassen aufgebaut: Einem symmetrisch zur Maschinenmitte angeordneten Mittelteil, in dem die Kröpfdistanzen der 360°-Standardverdrillung entsprechen, sind zwei Randzonen beigefügt, welche Kröpfdistanzen halber Länge verglichen mit dem Mittelteil aufweisen.

Eine wohlbekannte, solchermassen aufgebaute Verdrillungsart ist die 540°-Verdrillung (Ringland, US-A-2,821,641). Der Mittelteil erstreckt sich über die halbe Aktivteillänge und weist demzufolge einen Verdrillungswinkel von 180° auf; die Randzonen erstrecken sich je über ein Viertel der Aktivteillänge und weisen damit aufgrund der halben Kröpfdistanzen auch je eine 180°-Verdrillung auf. Zusammengezählt ergibt sich die Gesamtverdrillung von 540°. Diese Verdrillungsart kompensiert das Feld längs des Aktivteiles und kompensiert das Wickelkopffremdfeld. Das Wickelkopfeigenfeld wird hingegen nicht kompensiert. Unter Eigenfeld wird dabei ein zeitlich sinusförmig wechselndes Feld verstanden, welches quer zur Stabseite steht und dessen Amplitude bezüglich der Stabmitte proportional über die Stabhöhe verläuft (Stabmitte: Feld bleibt Null, Staboberkante: Feld maximal, Stabunterkante: gleiches maximales Feld, umgekehrtes Vorzeichen). Das Fremdfeld ist entsprechend ein zeitlich sinusförmig wechselndes Feld, welches quer zur Stabseite steht und bezüglich der Stabhöhe in Phase bleibt (zu einem Zeitpunkt über die Stabhöhe konstantes Feld).

Eine weitere Verdrillung, welche im Rahmen der Lehre des Willyoung-Patents liegt, ist die 450°-Verdrillung. Der Mittelteil erstreckt sich hierbei über 3/4 der Aktivteillänge (270°-Verdrillung), die Randzonen erstrecken sich je über 1/8 der Aktivteillänge und weisen je eine 90°-Verdrillung auf. Diese Verdrillungsart kompensiert das Feld längs des Aktivteiles und kompensiert relativ gut das Wickelkopfeigenfeld. Das Wickelkopffremdfeld wird dagegen nur teilweise kompensiert.

Grundsätzlich kann gesagt werden, dass alle möglichen Verdrillungen nach Willyoung nie alle Effekte des Wickelkopfes ausgleichen, ein Rest des Eigenfeldes oder Fremdfeldes bleibt immer unkompensiert.

### DARSTELLUNG DER ERFINDUNG

Es ist nun Aufgabe der Erfindung, einen Statorwicklungsstab zu schaffen, bei dem für den Fall der 450°-Verdrillung im Aktivteil das Wickelkopffremdfeld weitgehend kompensiert ist und so praktisch die Schlingströme auf sehr kleine Werte reduziert sind.

Die Aufgabe wird durch die Gesamtheit der Merkmale des Anspruchs 1 gelöst. Der Kern der Erfindung besteht darin, bei gleichbleibender Gesamtverdrillung und Aufteilung der Gesamtverdrillung auf den Mittelteil und die Randzonen des Aktivteils, den Anteil des Mittelteils an der Länge des Aktivteils zu vergrössern. Dadurch werden innerhalb der Leiterschleifen des Statorwicklungsstabes im Mittelteil zusätzliche Induktionsflächen für das Fremdfeld bereitgestellt, welche die Induktionsflächen in den Wickelköpfen kompensieren, ohne dass die übrigen Kompensationen wesentlich verändert werden.

Insbesondere wird der Mittelteil in seiner Länge soweit über 3/4 der Gesamtlänge des Aktivteiles verlängert, dass die dadurch entstehende zusätzliche Induktionsfläche für Fremdfelder der entsprechenden Induktionsfläche in den Wickelköpfen in ihrer Wirkung etwa gleich ist (gleiche Flussverkettung).

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer üblichen schematisierten Darstellung die an sich bekannte 450°-Verdrillung gemäss der US-A-3,118,015 (Willyoung) eines Statorwicklungsstabes mit 2 x 6 Teilleitern und die für das Fremdfeld wirksamen Flächen zweier ausgewählter Teilleiter mit den für die Summation der Schleifenströme wesentlichen Vorzeichen (die Flächen bzw. Fremdfeldanteile in den Wickelköpfen sind nicht kompensiert);
- Fig. 2: die Situation des Statorstabes aus Fig. 1 bezüglich des Eigenfeldes;
- Fig. 3: in einer zu Fig. 1 vergleichbaren Darstellung ein Ausführungsbeispiel eines Statorstabes nach der Erfindung mit verlängertem Mittelteil und daraus resultierender Kompensation der Fremdfeldanteile in den Wickelköpfen;
- Fig. 4: die Situation des Statorstabes aus Fig. 3 bezüglich des Eigenfeldes; und
- Fig. 5: einen Vergleich der Amplituden der Teilleiterströme bezogen auf den Nennwert für einen beispielhaften Statorwicklungsstab mit herkömmlicher 450°-Verdrillung (Kurve a) und Verdrillung nach der Erfindung (Kurve b).

### WEGE ZUR AUSFÜHRUNG DER ERFINDUNG

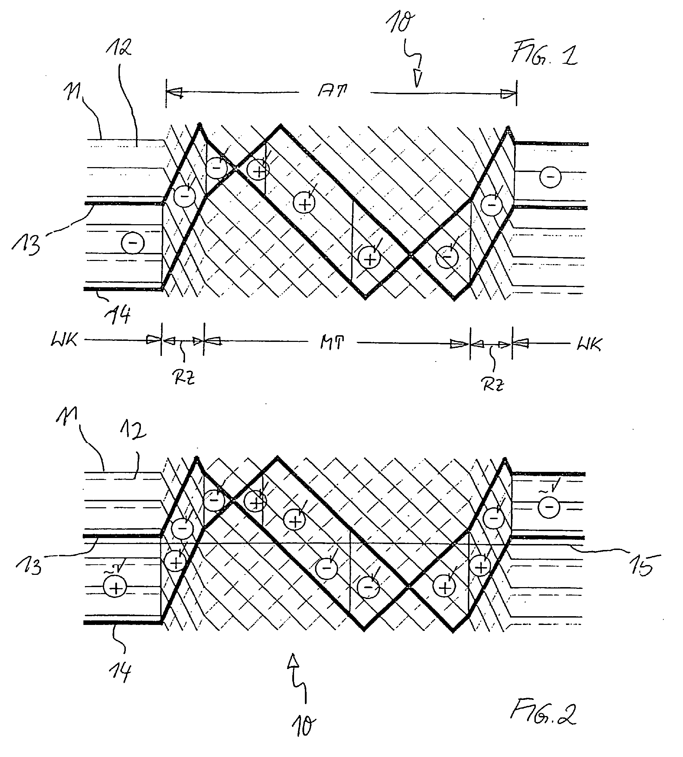

In Fig. 1 bis 4 ist jeweils eine Seitenansicht eines Statorwicklungsstabes 10 (Roebelstab) mit insgesamt 2 x 6 = 12 Teilleitern 11,..,14 gezeigt. Der Statorwicklungsstab 10 ist mit einem Aktivteil AT in der Wicklungsnut des Statorblechkörpers gelagert. Innerhalb des Aktivteils durchlaufen die Teilleiter 11,..,14 eine Verdrillung um 450°. An den Aktivteil AT grenzen an beiden Seiten Wicklungsköpfe WK an, in denen die Teilleiter 11,..,14 unverdrillt sind. Der Aktivteil AT ist unterteilt in einen zentralen Mittelteil MT und zwei den Mittelteil MT einschliessende, gleichlange Randzonen RZ. Im Mittelteil beträgt die Verdrillung 270°, in den Randzonen RZ jeweils 90°.

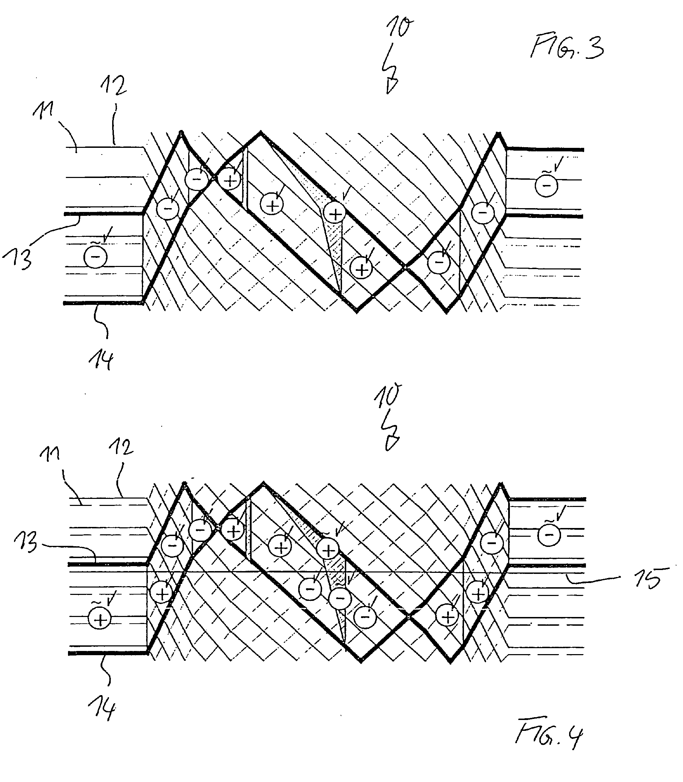

Fig. 1 und 2 betreffen dabei eine herkömmliche 450°-Verdrillung (Länge des Mittelteils MT beträgt 3/4 der Länge des Aktivteils; K=1/4 gemäss US-A-3,118,015). Diese Verdrillung kann mit (0/450/0) bezeichnet werden, weil sie im Aktivteil AT eine (kompensierende) Verdrillung von 450° aufweist, während die Verdrillung in den beiden Wickelköpfen WK 0 ist. Fig. 3 und 4 zeigen im Vergleich dazu eine 450°-Verdrillung gemäss der Erfindung (mit verlängertem Mittelteil MT).

Das Bezugszeichen 11 ist repräsentativ für die Teilleiter des in Blickrichtung hinteren Stapels von 6 Teilleitern, das Bezugszeichen 12 entsprechend für den vorderen Stapel. Wenn die Teilleiter im Zuge der Verdrillung vorne liegen, sind sie durchgezogen gezeichnet, wenn sie hinten liegen, gestrichelt. Eine repräsentative Schleife mit den Teilleitern 13 und 14 ist jeweils dick ausgezogen und wird zur Beurteilung der Verdrillung verwendet, wobei die für die Kompensation wesentlichen Vorzeichen jeweils eingetragen sind. Es werden zwei Betrachtungen vorgenommen, zuerst die Fremdfeldanalyse in Fig. 1 bzw. Fig. 3 (Flächen innerhalb der Schleifen müssen vorzeichengerecht addiert werden) und danach die Eigenfeldanalyse in Fig. 2 bzw. Fig. 4 (Flächen innerhalb der Schleifen bezüglich der Mittellinie 15 des Wicklungsstabes müssen vorzeichengerecht addiert werden). Ergibt die Summe aller Teilflächen Null, so treten keine Schlingströme auf.

Wie man anhand der Fig. 1 anschaulich sehen kann, sind die Fremdfeldanteile in den Wickelköpfen WK, welche die dick ausgezogene Schleife aus den Teilleitern 13 und 14 durchdringen, bei der herkömmlichen Verdrillung nicht kompensiert. Die Fremdfeldanteile im Aktivteil AT sind dagegen alle kompensiert.

Die Eigenfeldanteile in den Wickelköpfen WK, welche die dick ausgezogene Schleife durchdringen, sind bei der herkömmlichen Verdrillung gemäss Fig. 2 praktisch ausgeglichen. Die Eigenfeldanteile im Aktivteil AT sind alle kompensiert.

Gemäss der Erfindung wird nun von der Formel von Willyoung (US-A-3,118,015) betreffend der Länge des Mittelteils MT für die 450°-Verdrillung dahingehend abgewichen, dass man diesen Abschnitt über 3/4 der Länge des Aktivteils AT hinaus verlängert (der Mittelteil MT weist nach wie vor eine 270°-Verdrillung auf). Auf diese Weise werden Teilleiter, welche am meisten Strom führen, für eine längere Strecke im Aktivteil AT in Nutgrundnähe gehalten und solche, welche am wenigsten Strom führen, für eine längere Strecke im Aktivteil AT gegen die Nutöffnung. Bekanntlicherweise wirken diese Verhältnisse ausgleichend auf die Stromverteilung im Roebelstab. Diese Verdrillung kann mit (0/450unv/0) bezeichnet werden (unv=unvollständig kompensiert im Aktivteil, um das Wickelkopfrestfeld zu kompensieren).

Bei einem derartigen Statorwicklungsstab mit 450°-Verdrillung im verlängerten Aktivteil AT sind gemäss Fig. 3 die Fremdfeldanteile in den Wickelköpfen WK, welche die dick ausgezogene Schleife der Teilleiter 13 und 14 durchdringen, kompensiert durch die gekreuzt schraffierten (zusätzlichen) Anteile im Aktivteil AT. Die Verlängerung des Mittelteils MT wird dabei vorzugsweise so gewählt, das die Kompensation maximal ist. Die restlichen Fremdfeldanteile im Aktivteil AT sind alle kompensiert.

Gemäss Fig. 4 sind die Eigenfeldanteile in den Wickelköpfen WK, welche die dick ausgezogene Schleife durchdringen, praktisch ausgeglichen. Die Eigenfeldanteile im Aktivteil AT sind aber auch alle kompensiert, weil die zusätzlichen (gekreuzt schraffierten) Anteile sich praktisch gleichmässig auf beide Seiten oberhalb und unterhalb der Mittellinie 15 verteilen).

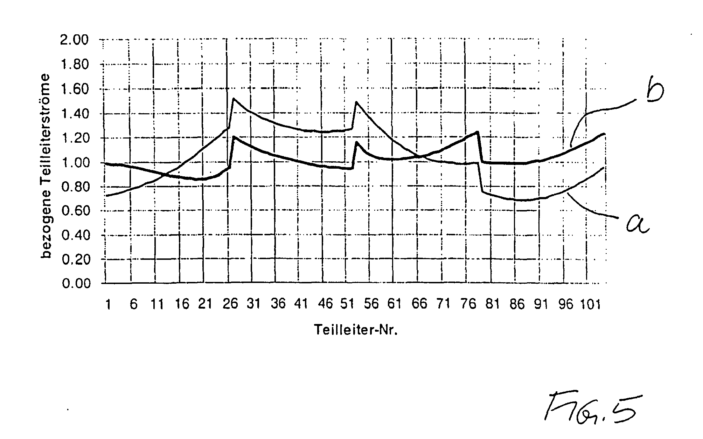

Wird eine solche (0/450unv/0)-Verdrillung bei einem zweipoligen Turbogenerator mit einer Zweischichtwicklung (bestehend aus Stäben mit beispielsweise zwei Stapeln von Teilleitern; insgesamt über 100 Teilleiter) vorgenommen, ergeben sich im Vergleich zur herkömmlichen Verdrillung nach Willyoung erhebliche Verbesserungen. In Fig. 5 sind für einen solchen Turbogenerator bei Nennlast die Amplituden der Teilleiterströme (bezogen auf den Nennwert) über der Nummer des jeweiligen Teilleiters aufgetragen. Kurve (a) bezieht sich dabei auf die herkömmliche (0/450/0)-Verdrillung, Kurve (b) auf die neuartige (0/450unv/0)-Verdrillung. Man erkennt deutlich, dass mit der Erfindung die Schlingströme fast ganz zum Verschwinden gebracht werden können (max. Teilleiterströme höchstens ca. 20% über dem Bezugswert). Damit ist eine Konstruktion eines Roebelstabes ohne Wickelkopfverdrillung gegeben, mit welcher es möglich ist, die Schlingströme wirksam zu unterdrücken.

### BEZUGSZEICHENLISTE

- 10: Statorwicklungsstab
- 11,..,14: Teilleiter
- 15: Mittellinie (Wicklungsstab)
- AT: Aktivteil
- MT: Mittelteil
- RZ: Randzone
- WK: Wickelkopf

## Patentansprüche

1. Statorwicklungsstab (10) für eine elektrische Maschine, welcher Statorwicklungsstab (10) eine Mehrzahl von in Stapeln übereinander und nebeneinander angeordneten Teilleitern (11,.., 14) umfasst und einen sich längs einer Wicklungsnut des Statorblechpaketes erstreckenden Aktivteil (AT) aufweist, an den sich auf beiden Seiten jeweils ein Wickelkopf (WK) anschliesst, wobei der Aktivteil (AT) in der Länge unterteilt ist in einen zentralen Mittelteil (MT) und zwei den zentralen Mittelteil (MT) einschliessende, gleichlange Randzonen (RZ), und wobei die Teilleiter (11,..,14) des Statorwicklungsstabes (10) nach Art eines Roebelstabes in der Aktivzone (AT) miteinander um insgesamt 450° verdrillt sind, von denen 270° auf den Mittelteil (MT) und jeweils 90° auf die beiden Randzonen (RZ) entfallen, während die Teilleiter (11,..,14) in den Wickelköpfen (WK) ohne Verdrillung parallel zueinander verlaufen, **dadurch gekennzeichnet, dass** zur Kompensation der im Bereich der Wickelköpfe (WK) wirksamen, Schlingströme induzierenden Fremdfelder der Mittelteil (MT) des Aktivteiles (AT) eine Länge aufweist, die mehr als 3/4 der Gesamtlänge des Aktivteils (AT) beträgt.

2. Statorwicklungsstab nach Anspruch 1, **dadurch gekennzeichnet, dass** der Mittelteil (MT) in seiner Länge soweit über 3/4 der Gesamtlänge des Aktivteiles (AT) verlängert wird, dass die **dadurch** entstehende zusätzliche Induktionsfläche für Fremdfelder der entsprechenden Induktionsfläche in den Wickelköpfen (WK) ihrer Wirkung in etwa gleich ist (gleiche Flussverkettung).

## Claims

1. Stator winding bar (10) for an electrical machine, which stator winding bar (10) comprises a plurality of conductor elements (11, ..., 14) which are arranged one above the other and next to one another in stacks, and has an active part (AT) which extends along a winding slot in the laminated stator core and which is adjoined on both sides by in each case one end winding (WK), with the length of the active part (AT) being subdivided into a central middle part (MT) and two edge zones (RZ) of equal length which surround the central middle part (MT), and with the conductor elements (11, ..., 14) of the stator winding bar (10) being transposed with one another by a total of 450° in the active zone (AT) in the manner of a Roebel bar, 270° of the said 450° being accounted for by the middle part (MT) and in each case 90° being accounted for by the two edge zones (RZ), while the conductor elements (11, ..., 14) in the end winding (WK) run parallel to one another without transposition, **characterized in that**, in order to compensate for the external fields which are active in the region of the end winding (WK) and induce loop currents, the middle part (MT) of the active part (AT) has a length which is more than 3/4 of the total length of the active part (AT).

2. Stator winding bar according to Claim 1, **characterized in that** the length of the middle part (MT) is extended beyond 3/4 of the total length of the active part (AT) to such an extent that the additional induction area for external fields produced as a result is approximately identical (identical flux linkage) in terms of effect to the corresponding induction area in the end winding (WK).

## Revendications

1. Barreau (10) d'enroulement de stator pour machine électrique, lequel barreau (10) d'enroulement de stator comporte plusieurs conducteurs partiels (11, ..., 14) disposés les uns à côté des autres, superposés les uns aux autres et présentant une partie active (AT) qui s'étend le long d'une rainure d'enroulement du paquet de tôles de stator et sur chacun des deux côtés de laquelle se raccorde une tête d'enroulement (WK),
la partie active (AT) étant divisé en longueur en une partie centrale (MT) et en deux zones de bordure (RZ) de même longueur qui se raccordent à la partie centrale (MT),
les conducteurs partiels (11, ..., 14) du barreau (10) d'enroulement de stator étant torsadés les uns par rapport aux autres dans la zone active (AT) à la manière d'un barreau de Roebel sur en tout 450° dont 270° sont situés sur la partie centrale (MT) et 90° sur chacune des deux zones de bordure (RZ),
les conducteurs partiels (11, ..., 14) s'étendant parallèlement les uns aux autres sans torsadage dans les têtes d'enroulement (WK),
**caractérisé en ce que**
pour compenser les champs étrangers qui induisent des courants de Foucault au niveau des têtes d'enroulement (WK), la longueur de la partie centrale (MT) de la partie active (AT) correspond à plus de 3/4 de la longueur totale de la partie active (AT).

2. Barreau d'enroulement de stator selon la revendication 1, **caractérisé en ce que** la longueur de la partie centrale (MT) est prolongée au-delà des 3/4 de la longueur totale de la partie active (AT) de sorte que la surface supplémentaire d'induction des champs étrangers ainsi formée pour la surface d'induction correspondante exerce un effet sensiblement égal dans les têtes d'enroulement (WK) (même chaînage du flux).
